# EUROPÄISCHE PATENTSCHRIFT

(11) **EP 3 043 887 B1**
(45) Veröffentlichungstag und Bekanntmachung des Hinweises auf die Patenterteilung: **10.10.2018**
(21) Anmeldenummer: 14805795.3
(22) Anmeldetag: 10.11.2014
(51) Int. Cl.: B01D 53/22, B01D 53/26, B01D 53/28, B01D 63/06

(54) **VORRICHTUNG ZUR ABTRENNUNG VON WASSER AUS EINEM WASSER ENTHALTENDEN FLUIDSTROM**
DEVICE FOR THE SEPARATION OF WATER FROM A FLUID FLOW CONTAINING WATER
DISPOSITIF DE SÉPARATION D'EAU D'AVEC UN COURANT DE FLUIDE CONTENANT DE L'EAU

(30) Priorität: 19.11.2013 DE 102013223562
(43) Veröffentlichungstag der Anmeldung: 20.07.2016
(73) Patentinhaber: Siemens Aktiengesellschaft, 80333 München (DE)
(72) Erfinder: TREMEL, Alexander, 91096 Möhrendorf (DE); ZIEGMANN, Markus, 91083 Baiersdorf (DE); LENK, Uwe, 08064 Zwickau (DE)
(86) Internationale Anmeldenummer: PCT/EP2014/074113
(87) Internationale Veröffentlichungsnummer: WO 2015/074901

(56) Entgegenhaltungen:
- EP-A2- 0 532 368

## Beschreibung

Die Erfindung betrifft eine Vorrichtung gemäß Anspruch 1 zur Abtrennung von Wasser, insbesondere Wasserdampf, aus einem Wasser, insbesondere Wasserdampf, enthaltenden Fluidstrom, insbesondere Gasstrom, umfassend wenigstens einen für Wasser durchlässigen Membrankörper, welcher wenigstens einen Membrankörperinnenraum begrenzt.
Die Abtrennung von Wasser aus Wasser enthaltenden Fluidströmen und somit die Ressourcen schonende Rückgewinnung von Wasser gewinnt stetig an Bedeutung. In diesem Zusammenhang ist es beispielsweise bekannt, Wasserdampf aus Abgasströmen abzutrennen. Der abgetrennte Wasserdampf wird üblicherweise durch kühlungsintensive Kondensationsprozesse in Wasser überführt. Dieses Prinzip kann über in Abgasströme geschaltete Oberflächenkondensatoren, z. B. in den Bauformen Rohrbündel- oder Plattenwärmeübertrager, realisiert sein.
Zur Abtrennung von Wasserdampf aus Wasserdampf enthaltenden Gasströmen wurden ferner für Wasserdampf durchlässige, d. h. wasserdampfselektive, Membrankörper vorgeschlagen, wobei der Wasserdampf aus dem Gasstrom durch den Membrankörper in einen durch den Membrankörper begrenzten Membrankörperinnenraum permeiert. Triebkraft für die Permeation des Wasserdampfs durch den Membrankörper ist eine in dem Membrankörperinnenraum verminderte Wasserdampfkonzentration und/oder ein in dem Membrankörperinnenraum anliegendes Vakuum und das daraus resultierende Druckgefälle, insbesondere Wasserdampfpartialdruckgefälle. Der in den Membrankörperinnenraum permeierte Wasserdampf wird über kühlungsintensive Kondensationsprozesse in flüssiges Wasser umgewandelt.

Die EP0532368 offenbart eine Vorrichtung zur Abtrennung von, unter anderem, Wasserdampf aus einem Wasserdampf enthaltenden Gasstrom, welche ein für Wasserdampf durchlässiges Bündel aus Hohlfasermembranen umfasst.

Mithin sind die aus dem Stand der Technik bekannten technischen Ansätze zu Abtrennung von Wasser aus einem Wasser enthaltenden Fluidstrom insbesondere im Hinblick auf den hierfür im Rahmen der Kondensation des Wasserdampfs erforderlichen Kühlungsbedarf verbesserungswürdig.

Der Erfindung liegt die Aufgabe zugrunde, eine verbesserte Vorrichtung zur Abtrennung von Wasser aus einem Wasser enthaltenden Fluidstrom anzugeben.

Die Aufgabe wird erfindungsgemäß durch eine Vorrichtung der eingangs genannten Art gelöst, welche sich erfindungsgemäß dadurch auszeichnet, dass sich in dem Membrankörperinnenraum wenigstens ein hydrophobes Fluid zur Aufnahme von aus dem Fluidstrom durch den Membrankörper in den Membrankörperinnenraum tretendem Wasser, insbesondere Wasserdampf, befindet.

Die erfindungsgemäße technische Lehre betrifft ein besonderes Prinzip zur Abtrennung von Wasser, insbesondere von Wasserdampf, allgemein von Wassermolekülen, aus einem Wasser, insbesondere Wasserdampf, enthaltenden Fluidstrom, insbesondere einem Wasserdampf enthaltenden Gasstrom. Insbesondere ermöglicht die erfindungsgemäße technische Lehre sonach eine Abtrennung von Wasserdampf aus Wasserdampf enthaltenden Gasströmen, insbesondere aus Wasserdampf enthaltenden Abgasströmen. Das erfindungsgemäße Prinzip lässt sich mit der nachstehend näher beschriebenen erfindungsgemäßen Vorrichtung realisieren.

Die erfindungsgemäße Vorrichtung umfasst wenigstens einen Membrankörper, welcher wenigstens einen Membrankörperinnenraum begrenzt. Der Membrankörper ist aus wenigstens einem für flüssige bzw. gasförmige Wassermoleküle durchlässigen und somit wasserselektiven, insbesondere wasserdampfselektiven, Material, wie z. B. sulfoniertem Polyetheretherketon, kurz SPEEK, sulfoniertem Polyethersulfon, kurz SPES, oder Polyetherblockamid, kurz PEBAX, gebildet. Die wasserselektive, insbesondere wasserdampfselektive, Ausbildung des den Membrankörper bildenden Materials erlaubt die Rückgewinnung von Wasser hoher Reinheit, da unerwünschte Bestandteile des Wasser enthaltenden Fluidstroms nicht durch den Membrankörper in den Membrankörperinnenraum gelangen können.

Das den Membrankörper bildende Material kann porös sein, d. h. es kann eine, insbesondere zumindest abschnittsweise offenporige, Struktur aufweisen. Die Porengröße des den Membrankörper bildenden Materials liegt in der Regel in einem Bereich zwischen 1 und 50 nm, insbesondere in einem Bereich zwischen 1 und 10 nm. Selbstverständlich kann die Porengröße des den Membrankörper bildenden Materials in Ausnahmefällen auch außerhalb der genannten Porengrößenbereiche liegen. Grundsätzlich ist es jedoch auch denkbar, dass das den Membrankörper bildende Material nicht porös ist.

Innerhalb des Membrankörpers, d. h. in dem durch den Membrankörper begrenzten Membrankörperinnenraum befindet sich wenigstens ein hydrophobes Fluid, d. h. insbesondere wenigstens eine hydrophobe Flüssigkeit. Das hydrophobe Fluid ist oder umfasst im Allgemeinen wenigstens eine Substanz, welche sich aufgrund ihrer strukturellen, insbesondere chemischen, Unähnlichkeit zu Wasser nicht oder nur sehr schlecht mit Wasser mischen lässt. Bei dem hydrophoben Fluid kann es sich sonach z. B. um eine natürliche oder synthetische organische Flüssigkeit, insbesondere um ein natürliches oder mineralisches oder synthetisches Öl, handeln.

Die Verwendung natürlicher pflanzlicher Öle, d. h. die Verwendung von Pflanzenölen, als hydrophobes Fluid ist beispielsweise zweckmäßig, wenn das aus dem hydrophoben Fluid rückgewonnene Wasser im Bereich der Lebensmitteltechnik eingesetzt wird. Eine weitere Aufbereitungsstufe des derart rückgewonnenen Wassers ist hier nicht zwingend erforderlich, da die in dem rückgewonnenen Wasser gegebenenfalls geringfügig enthaltenen Rückstände an hydrophobem Fluid selbst die Eignung des rückgewonnenen Wassers als Lebens- oder Verzehrmittel nicht beeinträchtigen.

Die erfindungsgemäße Vorrichtung ist typischerweise derart konzipiert, dass das hydrophobe Fluid kontinuierlich durch den Membrankörperinnenraum strömt, d. h. insbesondere, dass das hydrophobe Fluid kreislaufartig durch den Membrankörperinnenraum zirkuliert. Durch die Möglichkeit einer kreislaufartigen Zirkulation des hydrophoben Fluids durch den Membrankörperinnenraum sind die Betriebskosten der erfindungsgemäßen Vorrichtung, insbesondere im Hinblick auf das hydrophobe Fluid, vergleichsweise gering, gleichermaßen ist die erfindungsgemäße Vorrichtung derart für den Langzeitbetrieb ausgelegt.

Das erfindungsgemäße Prinzip zur Abtrennung von Wasser, insbesondere von Wasserdampf, aus einem Wasser, insbesondere Wasserdampf, enthaltenden Fluidstrom beruht darauf, dass das durch den Membrankörper getretene, d. h. permeierte, Wasser, insbesondere der durch den Membrankörper getretene, d. h. permeierte, Wasserdampf, sich in dem in dem Membrankörperinnenraum befindlichen hydrophoben Fluid an- bzw. einlagert. Das in dem Membrankörperinnenraum befindliche hydrophobe Fluid dient sonach der Aufnahme des durch den Membrankörper in den Membrankörperinnenraum getretenen Wassers bzw. Wasserdampfs, allgemein der durch den Membrankörper in den Membrankörperinnenraum getretenen Wassermoleküle.

Triebkraft für die Permeation des Wassers bzw. Wasserdampfs durch den Membrankörper ist die Aufnahme von Wassermolekülen in dem hydrophoben Fluid und das dadurch entstehende bzw. aufrechterhaltene Konzentrationsgefälle (Wasserkonzentrationsgefälle) zwischen dem Wasser bzw. Wasserdampf enthaltenden Fluidstrom, aus welchem das Wasser bzw. der Wasserdampf abgetrennt werden soll, und dem hydrophoben Fluid. Es besteht sonach ein Gefälle zwischen der Wasserkonzentration an der Kontaktfläche außerhalb des Membrankörpers, d. h. der Wasserkonzentration des außerhalb des Membrankörpers strömenden Fluidstroms, und der Wasserkonzentration an der Kontaktfläche innerhalb des Membrankörpers, d. h. der Wasserkonzentration innerhalb des in dem Membrankörperinnenraum befindlichen hydrophoben Fluids. Die Wasserkonzentration (Löslichkeit) in dem Wasser bzw. Wasserdampf enthaltenden Fluidstrom ist dabei typischerweise deutlich höher als die Wasser(dampf)konzentration in dem hydrophoben Fluid, welche idealerweise gegen Null geht. Dadurch ist auch eine Abtrennung von Wasser bzw. Wasserdampf aus Wasser bzw. Wasserdampf enthaltenden Fluidströmen mit vergleichsweise geringen Wasser(dampf)konzentrationen möglich.

Wie sich im Weiteren noch ergibt, kann die An- bzw. Einlagerung des Wassers bzw. Wasserdampfs in dem hydrophoben Fluid und somit die Aufnahme des Wassers bzw. Wasserdampfs in dem hydrophoben Fluid ferner, d. h. alternativ oder insbesondere ergänzend durch ein Druckgefälle, d. h. einen Druckunterschied, zwischen dem Wasser bzw. Wasserdampf enthaltenden Fluidstrom und dem hydrophoben Fluid unterstützt sein. Der Druckunterschied kann insbesondere durch einen Unterdruck innerhalb des Membrankörperinnenraums realisiert sein. Zur Realisierung des Unterdrucks innerhalb des Membrankörperinnenraums kann die Vorrichtung eine Druckregeleinrichtung, wie z. B. eine Vakuumpumpe, umfassen.

Das in dem hydrophoben Fluid aufgenommene bzw. enthaltene, aus dem Wasser bzw. Wasserdampf enthaltenden Fluidstrom abgetrennte Wasser kann aus dem hydrophoben Fluid mittels chemischer und/oder physikalischer, insbesondere mechanischer, Abtrennungsprinzipien abgetrennt und somit rückgewonnen werden. Hierfür umfasst die erfindungsgemäße Vorrichtung zweckmäßig wenigstens eine dem Membrankörper zugeordnete, insbesondere nachgeschaltete, Trenneinrichtung zur chemischen und/oder physikalischen, insbesondere mechanischen, Abtrennung des in dem hydrophoben Fluid aufgenommenen Wassers von dem hydrophoben Fluid.

Um das vorstehend beschriebene Gefälle zwischen der Wasserkonzentration außerhalb des Membrankörpers, d. h. der Wasserkonzentration des außerhalb des Membrankörpers strömenden Fluidstroms, und der Wasserkonzentration innerhalb des Membrankörpers, d. h. der Wasserkonzentration innerhalb des in dem Membrankörperinnenraum befindlichen hydrophoben Fluids, zu realisieren, ist es zweckmäßig, wenn das hydrophobe Fluid den Membrankörperinnenraum durchströmt, d. h. insbesondere in dem bzw. durch den Membrankörperinnenraum in einem, insbesondere geschlossenen, Kreislauf zirkuliert. Hierfür kann die erfindungsgemäße Vorrichtung wenigstens eine Zuführeinrichtung zur Zuführung des hydrophoben Fluids in den Membrankörperinnenraum und wenigstens eine Abführeinrichtung zur Abführung des hydrophoben Fluids aus dem Membrankörperinnenraum umfassen. Die Zuführeinrichtung wie auch die Abführeinrichtung können geeignete Fördereinrichtungen, wie z. B. Pumpen, zur Zu- bzw. Abführung des hydrophoben Fluids in bzw. aus dem Membrankörperinnenraum umfassen.

Über die Zuführeinrichtung ist sonach eine, insbesondere kontinuierliche, Zuführung von hydrophobem Fluid in den Membrankörperinnenraum möglich. Über die Abführeinrichtung ist entsprechend eine, insbesondere kontinuierliche, Abführung von hydrophobem Fluid aus dem Membrankörperinnenraum möglich. Zwischen der Abführeinrichtung und der Zuführeinrichtung lässt sich daher ein, insbesondere geschlossener, Kreislauf ausbilden, wobei über die Abführeinrichtung aus dem Membrankörperinnenraum geführtes hydrophobes Fluid in die Zuführeinrichtung und über diese zurück in den Membrankörperinnenraum geführt werden kann. Der Membrankörper, d. h. insbesondere der Membrankörperinnenraum, ist sonach in den zwischen der Abführeinrichtung und der Zuführeinrichtung gebildeten Kreislauf geschaltet. In den zwischen der Abführeinrichtung und der Zuführeinrichtung gebildeten Kreislauf können weitere Funktionskomponenten der erfindungsgemäßen Vorrichtung, wie z. B. eine vorstehend genannte Trenneinrichtung, geschaltet sein.

Prinzipiell ist über das kreislaufartig durch den Membrankörperinnenraum zirkulierende hydrophobe Fluid sichergestellt, dass mit dem aus dem Wasser bzw. Wasserdampf enthaltenden Fluidstrom durch den Membrankörper in den Membrankörperinnenraum getretenen Wasser bzw. Wasserdampf angereichertes hydrophobes Fluid aus dem Membrankörper abgeführt werden kann. Derart ist in dem Membrankörperinnenraum stets eine vergleichsweise geringe, d. h. zumindest unterhalb der Wasser(dampf)konzentration in dem Wasser enthaltenden Fluidstrom liegende, Wasser(dampf)konzentration gegeben, was sich positiv auf die Ausbildung und Aufrechterhaltung der vorstehend beschriebenen, den Eintritt des Wassers bzw. Wasserdampfs aus dem Wasser bzw. Wasserdampf enthaltenden Fluid durch den Membrankörper in den Membrankörperinnenraum bedingenden Triebkraft auswirken kann.

Für die Ausbildung der Triebkraft, welche die Permeation von Wasser, insbesondere Wasserdampf, aus dem Wasser, insbesondere Wasserdampf, enthaltenden Fluidstrom durch den Membrankörper in den Membrankörperinnenraum bedingt, ist wesentlich, dass an der dem Wasser bzw. Wasserdampf enthaltenden Fluidstrom zugewandten Oberfläche des Membrankörpers eine sehr geringe Wasser(dampf)konzentration gegeben ist.

Die Ausbildung eines entsprechenden Kreislaufs, in welchem bzw. durch welchen das hydrophobe Fluid zirkuliert, kann konstruktiv z. B. dadurch realisiert sein, dass der Membrankörper hohlzylindrisch ausgeführt ist, wobei an oder im Bereich einer ersten Stirnseite des Membrankörpers eine Zuführeinrichtung zur Zuführung des hydrophoben Fluids in den Membrankörperinnenraum anordenbar oder angeordnet ist, und an oder im Bereich einer zweiten Stirnseite des Membrankörpers eine Abführeinrichtung zur Abführung des hydrophoben Fluids aus dem Membrankörperinnenraum anordenbar oder angeordnet ist. Diese Ausführungsform der erfindungsgemäßen Vorrichtung ermöglicht sonach eine axiale Durchströmung und somit eine axiale Zirkulation des hydrophoben Fluids durch den Membrankörper respektive durch den Membrankörperinnenraum, bei welcher die Zu- und Abführung des hydrophoben Fluids in bzw. aus dem Membrankörperinnenraum über entsprechende an den oder im Bereich der jeweiligen Stirnseiten des Membrankörpers angeordnete Zuführ- bzw. Abführeinrichtungen erfolgt. Die Zu- und Abführung des hydrophoben Fluids erfolgt hierbei typischerweise über unterschiedliche, d. h. insbesondere gegenüber liegende, Stirnseite des Membrankörpers. Das gleiche Prinzip lässt sich selbstverständlich auf Membrankörper mit anderen Geometrien, d. h. z. B. auf platten- oder kugelförmig ausgebildete Membrankörper, übertragen.

Die Ausbildung eines entsprechenden Kreislaufs, in welchem bzw. durch welchen das hydrophobe Fluid zirkuliert, kann konstruktiv z. B. auch dadurch realisiert sein, dass der Membrankörper hohlzylindrisch ausgeführt ist, wobei eine Zuführeinrichtung mit wenigstens einem den Membrankörperinnenraum koaxial zu der Längsachse des Membrankörpers abschnittsweise durchsetzenden Zuführkanal vorgesehen ist, wobei eine Abführeinrichtung im Bereich eines den Zuführkanal radial umschließenden Ringraums vorgesehen ist. In dieser Ausführungsform der erfindungsgemäßen Vorrichtung strömt das hydrophobe Fluid über eine, typischerweise an einer oder im Bereich einer ersten Stirnseite des Membrankörpers angeordnete, Zuführeinrichtung zunächst in wenigstens einen den Membrankörperinnenraum axial durchsetzenden und somit innerhalb des Membrankörperinnenraums angeordneten Zuführkanal. Das aus dem wenigstens einen Zuführkanal, typischerweise im Bereich einer der ersten Stirnseite gegenüber liegenden zweiten Stirnseite des Membrankörpers, in den Membrankörperinnenraum austretende hydrophobe Fluid strömt durch einen den wenigstens einen Zuführkanal radial umgebenden Ringraum zu einer Abführeinrichtung, welche hier typischerweise ebenso wie die Zuführeinrichtung an der oder im Bereich der ersten Stirnseite des Membrankörpers angeordnet ist. Die Zu- und Abführung des hydrophoben Fluids kann in dieser Ausführungsform der erfindungsgemäßen Vorrichtung sonach über die gleiche Stirnseite des Membrankörpers erfolgen, was gegebenenfalls eine im Vergleich weniger Bauraum beanspruchende Konstruktion der erfindungsgemäßen Vorrichtung ermöglicht. Das gleiche Prinzip lässt sich selbstverständlich ebenso auf Membrankörper mit anderen Geometrien, d. h. z. B. auf platten- oder kugelförmig ausgebildete Membrankörper, übertragen.
Insbesondere sofern das aus dem Wasser enthaltenden Fluidstrom abzutrennende Wasser gasförmig ist, d. h. sofern es sich bei dem aus dem Wasser enthaltenden Fluidstrom abzutrennenden Wasser um Wasserdampf handelt, ist es zur Rückgewinnung des Wassers zweckmäßig, den in dem hydrophoben Fluid enthaltenen Wasserdampf zu kondensieren, d. h. das in Form von Wasserdampf in seiner gasförmigen Phase vorliegende Wasser in seine flüssige Phase zu überführen. Hierzu umfasst die erfindungsgemäße Vorrichtung vorteilhaft wenigstens eine dem Membrankörper zugeordnete, insbesondere nachgeschaltete, Kondensationseinrichtung zur Kondensation des in dem hydrophoben Fluid aufgenommenen bzw. enthaltenen gasförmigen Wassers. Über die Kondensationseinrichtung, welche typischerweise wenigstens eine Kühleinrichtung zur Abkühlung des in dem hydrophoben Fluid aufgenommenen bzw. enthaltenen Wasserdampfs auf bzw. unterhalb seine Kondensationstemperatur umfasst, ist sonach eine Überführung von Wasserdampf, d. h. gasförmigem Wasser, in flüssiges Wasser realisierbar.

Es ist auch denkbar, dass bereits innerhalb des Membrankörpers oder in dem hydrophoben Fluid vor der Kühlung Kondensation des Wasserdampfs stattfindet. Dies soll anhand des nachfolgenden Beispiels für einen Wasserdampf enthaltenden Fluidstrom mit einer Temperatur von ca. 70°C erläutert werden. Bei einem derartigen Fluidstrom kann sich ein Wasserdampfanteil von ca. 30% ergeben, d. h. bei atmosphärischem Druck (1 bar) liegt ein Wasserdampfpartialdruck von 300 mbar vor. Bedingt durch die Permeation des Wasserdampfs durch den Membrankörper in den Membrankörperinnenraum beträgt die Temperatur des in dem Membrankörperinnenraum befindlichen hydrophoben Fluids ebenso ca. 70°C. In dem Membrankörperinnenraum liegt ebenso ein Druck von 1 bar an. Da die Wasserdampfmoleküle sonach einem Druck von 1 bar ausgesetzt sind, kondensieren diese innerhalb des hydrophoben Fluids, d. h. der Wasserdampf verflüssigt sich bereits innerhalb des hydrophoben Fluids vor der Kühlung.

Sofern eine Kondensation von Wasserdampf in dem hydrophoben Fluid innerhalb des Membrankörperinnenraumes stattfindet, ist eine entsprechende Kondensationseinrichtung zu ersetzen durch eine Kühleinrichtung bzw. Wärmeabführungseinrichtung, über welche eine Kühlung des erwärmten hydrophoben Fluids erfolgt. Dem Membrankörper kann sonach wenigstens eine Kühleinrichtung zur Kühlung von dem hydrophoben Fluid zugeordnet, insbesondere nachgeschaltet, sein.

Über die Kondensation des in dem hydrophoben Fluid aufgenommenen bzw. enthaltenen Wassers bzw. Wasserdampfs lässt sich das hydrophobe Fluid sonach in ein zwei getrennt voneinander vorliegende Phasen, d. h. eine aus dem hydrophoben Fluid bestehende erste Phase und eine aus Wasser bestehende zweite Phase, enthaltendes Phasengemisch, aufteilen, aus welchem Phasengemisch die aus Wasser bestehende zweite Phase einfach abzutrennen ist. Selbstverständlich kann in Abhängigkeit der jeweiligen Mischbarkeit der beiden Phasen miteinander in einer Phase ein geringfügiger Anteil der jeweils anderen Phase erhalten bleiben bzw. sein.

Zweckmäßig kann der Druck innerhalb der Kondensationseinrichtung im Vergleich zu dem innerhalb des Membrankörpers herrschenden Druck erhöht werden, um die Kondensationstemperatur des in dem hydrophoben Fluid aufgenommenen bzw. enthaltenen Wassers bzw. Wasserdampfs möglichst hoch zu halten, so dass für die Kondensation des in dem hydrophoben Fluid aufgenommenen bzw. enthaltenen Wassers bzw. Wasserdampfs, eine Kühlquelle mit vergleichsweise hohem Temperaturniveau verwendet werden kann. Dieser Ansatz ist im Hinblick auf die Energieeffizienz der erfindungsgemäßen Vorrichtung bzw. der Abtrennung des in dem Fluidstrom aufgenommenen bzw. enthaltenen Wassers bzw. Wasserdampfs aus dem Fluidstrom vorteilhaft. Die Druckerhöhung innerhalb der Kondensationseinrichtung ist insbesondere vorteilhaft, wenn die An- bzw. Einlagerung des Wassers bzw. Wasserdampfs in dem hydrophoben Fluid und somit die Aufnahme des Wassers bzw. Wasserdampfs in dem hydrophoben Fluid ferner durch ein Druckgefälle, d. h. einen Druckunterschied, zwischen dem Wasser bzw. Wasserdampf enthaltenden Fluidstrom und dem hydrophoben Fluid unterstützt ist, was, wie erwähnt, typischerweise durch einen Unterdruck innerhalb des Membrankörpers respektive innerhalb des Membrankörperinnenraums realisiert ist.
Wie weiter oben bereits erwähnt, kann die erfindungsgemäße Vorrichtung zweckmäßig wenigstens eine dem Membrankörper, gegebenenfalls der dem Membrankörper zugeordneten bzw. nachgeschalteten Kondensationseinrichtung, nachgeschaltete Trenneinrichtung zur chemischen und/oder physikalischen, insbesondere mechanischen, Abtrennung des in dem hydrophoben Fluid aufgenommenen Wassers von dem hydrophoben Fluid umfassen. Über die Trenneinrichtung erfolgt die Abtrennung des in dem hydrophoben Fluid aufgenommenen bzw. enthaltenen Wassers von dem hydrophoben Fluid. Das von dem Wasser befreite hydrophobe Fluid kann dem Membrankörper wieder zugeführt werden. Das von dem hydrophoben Fluid befreite und somit rückgewonnene Wasser kann zu unterschiedlichen Zwecken außerhalb bzw. innerhalb der erfindungsgemäßen Vorrichtung eingesetzt werden. Die Abtrennung von in dem hydrophoben Fluid aufgenommenen bzw. enthaltenen flüssigen Wasser von dem hydrophoben Fluid kann insbesondere mechanisch, d. h. durch Sedimentation (Ablagerung bzw. Absetzung) erfolgen, so dass die Trenneinrichtung entsprechend zur Sedimentation des in dem in dem hydrophoben Fluid aufgenommenen Wassers eingerichtet ist. Die Trenneinrichtung kann sonach beispielsweise wenigstens ein Sedimentationsbecken umfassen. Selbstverständlich sind grundsätzlich auch andere chemische und/oder physikalische Abtrennprinzipien zur Abtrennung des in dem hydrophoben Fluid aufgenommenen bzw. enthaltenen Wassers von dem hydrophoben Fluid denkbar.

Die Erfindung betrifft ferner ein Verfahren gemäß Anspruch 5 zur Abtrennung von Wasser, insbesondere Wasserdampf, aus einem Wasser, insbesondere Wasserdampf, enthaltenden Fluidstrom. Das Verfahren zeichnet sich dadurch aus, dass das abzutrennende Wasser bzw. der abzutrennende Wasserdampf durch wenigstens einen für Wasser bzw. Wasserdampf, allgemein Wassermoleküle, durchlässigen Membrankörper in wenigstens ein innerhalb eines von dem Membrankörper begrenzten Membrankörperinnenraum befindliches hydrophobes Fluid überführt und in dem hydrophoben Fluid aufgenommen wird. Das erfindungsgemäße Verfahren kann vorrichtungsmäßig insbesondere in einer erfindungsgemäßen Vorrichtung implementiert sein bzw. werden.

Grundsätzlich gelten hinsichtlich des erfindungsgemäßen Verfahrens sämtliche Ausführungen im Zusammenhang mit der erfindungsgemäßen Vorrichtung in allen beschriebenen Ausführungsformen bzw. Varianten analog. Umgekehrt gelten sämtliche Ausführungsformen im Zusammenhang mit dem erfindungsgemäßen Verfahren in allen beschriebenen Ausführungsformen bzw. Varianten für die erfindungsgemäße Vorrichtung analog.

Im Rahmen des erfindungsgemäßen Verfahrens ist es zweckmäßig, wenn das hydrophobe Fluid den Membrankörperinnenraum, insbesondere kreislaufartig, durchströmt. Das hydrophobe Fluid kann sonach insbesondere in einem Kreislauf, in welchen der Membrankörper respektive der Membrankörperinnenraum geschaltet wird, strömen bzw. zirkulieren. In den Kreislauf können weitere Funktionskomponenten der das erfindungsgemäße Verfahren implementierenden Vorrichtung, wie z. B. Kondensationseinrichtungen zur Kondensation von in dem hydrophoben Fluid enthaltenen gasförmigen Wassers und/oder Kühleinrichtungen zur Kühlung von dem durch vorherige Kondensation erwärmten hydrophoben Fluid und/oder Trenneinrichtungen zur chemischen und/oder physikalischen Abtrennung des in dem hydrophoben Fluid aufgenommenen bzw. enthaltenen Wassers von dem hydrophoben Fluid, geschaltet werden.

Innerhalb des Membrankörperinnenraums kann zweckmäßig ein Unterdruck angelegt werden. Der Unterdruck dient insbesondere als zusätzlich unterstützende Triebkraft für den Eintritt bzw. die Permeation des in dem Wasser enthaltenden Fluidstroms enthaltenen Wassers bzw. Wasserdampfs durch den Membrankörper in den Membrankörperinnenraum und sonach in das hydrophobe Fluid.

Insbesondere sofern das aus dem Wasser enthaltenden Fluidstrom abzutrennende Wasser gasförmig ist, d. h. sofern es sich bei dem aus dem Wasser enthaltenden Fluidstrom abzutrennenden Wasser um Wasserdampf handelt, ist es zur Rückgewinnung des Wassers zweckmäßig, wenn das in dem hydrophoben Fluid aufgenommene bzw. enthaltene gasförmige Wasser, d. h. der in dem hydrophoben Fluid aufgenommene bzw. enthaltene Wasserdampf, kondensiert wird.

Dabei ist es, um die Kondensationstemperatur des zu kondensierenden Wasserdampfs möglichst hoch zu halten und derart gleichermaßen die Verwendung einer Kühlquelle mit vergleichsweise hohem Temperaturniveau zu ermöglichen, zweckmäßig, wenn der Druck des in dem hydrophoben Fluid aufgenommenen bzw. enthaltenen gasförmigen Wassers bzw. Wasserdampfs vor der Kondensation erhöht wird.

Das in dem hydrophoben Fluid aufgenommene bzw. enthaltene Wasser kann chemisch und/oder physikalisch, insbesondere mechanisch, aus dem hydrophoben Fluid abgetrennt werden. Insbesondere kommt zur Abtrennung von in dem hydrophoben Fluid aufgenommenen bzw. enthaltenen flüssigen Wasser von dem hydrophoben Fluid eine mechanische Abtrennung in Form einer Sedimentation (Ablagerung bzw. Absetzung) in Frage. Selbstverständlich sind grundsätzlich auch andere chemische und/oder physikalische Abtrennprinzipien zur Abtrennung von in dem hydrophoben Fluid aufgenommenen bzw. enthaltenen Wasser von dem hydrophoben Fluid denkbar.

Sofern die Abtrennung von in dem hydrophoben Fluid aufgenommenen bzw. enthaltenen Wasser von dem hydrophoben Fluid über Sedimentation erfolgt, kann die Strömungsgeschwindigkeit des hydrophoben Fluids im Bereich einer entsprechenden Trenneinrichtung zum Zwecke der Sedimentation reduziert werden. Derart kann der Wirkungsgrad der Sedimentation verbessert werden.

Im Rahmen des erfindungsgemäßen Verfahrens kann als hydrophobes Fluid insbesondere eine natürliche oder synthetische organische Flüssigkeit, insbesondere ein natürliches oder mineralisches oder synthetisches Öl, verwendet werden.

Weitere Vorteile, Merkmale und Einzelheiten der Erfindung ergeben sich aus den im Folgenden beschriebenen Ausführungsbeispielen sowie anhand der Zeichnung. Dabei zeigen:

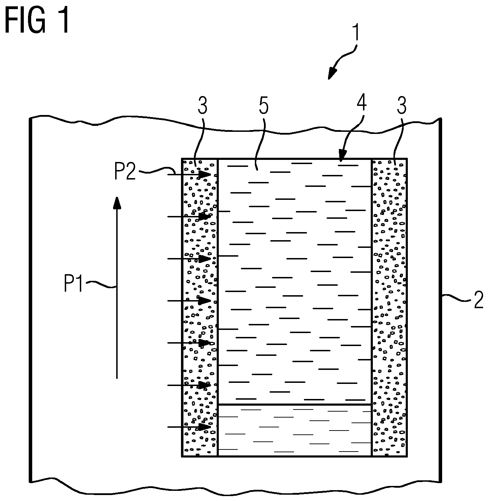

- FIG 1 - 3: je eine Prinzipdarstellung einer Vorrichtung zur Abtrennung von Wasser, insbesondere Wasserdampf, aus einem Wasser, insbesondere Wasserdampf, enthaltenden Fluidstrom gemäß einem Ausführungsbeispiel der Erfindung.

FIG 1 zeigt eine Prinzipdarstellung einer Vorrichtung 1 zur Abtrennung von Wasser, insbesondere Wasserdampf, aus einem Wasser, insbesondere Wasserdampf, enthaltenden Fluidstrom gemäß einem Ausführungsbeispiel der Erfindung.

Die in FIG 1 gezeigte Vorrichtung 1 wie auch die in den Fig. 2, 3 gezeigten Vorrichtungen 1 sind jeweils zur Durchführung eines Verfahrens zur Abtrennung von Wasser, insbesondere Wasserdampf, aus einem Wasser, insbesondere Wasserdampf, enthaltenden Fluidstrom gemäß einem Ausführungsbeispiel der Erfindung ausgebildet bzw. eingerichtet.

Die Vorrichtung 1 ist unmittelbar in einen einen Wasserdampf enthaltenden Gasstrom führenden Kanal 2 geschaltet. Bei dem durch den Pfeil P1 angedeuteten Gasstrom handelt es sich z. B. um einen Wasserdampf enthaltenden Abgas- oder Abluftstrom, welcher im Rahmen eines technischen Prozesses, wie z. B. dem Betrieb eines Kraftwerks, insbesondere Gasturbinenkraftwerks, anfällt. Der Gasstrom enthält neben Wasserdampf typischerweise andere, insbesondere gasförmige, Bestandteile, wie z. B.

Sauerstoff, Stickstoff, Kohlendioxid, Stickoxide, Schwefeloxide etc. Der Gasstrom ist typischerweise bedingt durch den jeweiligen technischen Prozess, welchem er entstammt, auf eine bestimmte Temperatur erwärmt.

Die Vorrichtung 1 umfasst einen hohlzylindrischen Membrankörper 3. Der Membrankörper 3 könnte gleichermaßen auch eine andere Geometrie aufweisen, d. h. er könnte beispielsweise auch platten- oder kugelförmig ausgeführt sein.

Da der Membrankörper 3 aus einem wasserdampfselektiven Material, wie z. B. sulfoniertem Polyetheretherketon, gebildet ist, ist der Membrankörper 3 für den in dem Gasstrom enthaltenen Wasserdampf durchlässig. Die übrigen Bestandteile des Gasstroms können sonach nicht durch den Membrankörper 3 permeieren, sondern strömen ohne signifikante Abkühlung entlang des Membrankörpers 3. Das den Membrankörper 3 bildende Material ist porös, d. h. es weist eine, insbesondere offenporige, Struktur mit einer Porengröße zwischen 1 und 10 nm auf.

Der Membrankörper 3 begrenzt einen Membrankörperinnenraum 4. Durch den Membrankörperinnenraum 4 strömt ein hydrophobes Fluid 5, d. h. z. B. ein mineralisches oder pflanzliches Öl. Das durch den Membrankörperinnenraum 4 strömende hydrophobe Fluid 5 dient der Aufnahme von durch den Membrankörper 3 in den Membrankörperinnenraum 4 permeiertem Wasserdampf, d. h. von durch den Membrankörper 3 in den Membrankörperinnenraum 4 permeierten Wassermolekülen. Die Permeation von Wasserdampf bzw. Wassermolekülen durch den Membrankörper 3 in den Membrankörperinnenraum 4 ist durch die Pfeile P2 angedeutet.

Wesentliche Triebkraft für die Permeation des in dem Gasstrom enthaltenen Wasserdampfs durch den Membrankörper 3 in den Membrankörperinnenraum 4 und sonach für die An- bzw. Einlagerung des Wasserdampfs in das bzw. in dem hydrophobe(n) Fluid 5 ist ein Konzentrationsgefälle (Wasserkonzentrationsgefälle) zwischen den Grenzflächen des Membrankörpers 3 auf Seiten des Wasser enthaltenden Gasstroms, aus welchem das Wasser bzw. der Wasserdampf abgetrennt werden soll, außerhalb des Membrankörpers 3 und auf Seiten des hydrophoben Fluids 5 innerhalb des Membrankörpers 3 bzw. innerhalb des Membrankörperinnenraums 4. Die Wasserkonzentration in dem Wasser enthaltenden Gasstrom ist typischerweise deutlich höher als die Wasserkonzentration in dem hydrophoben Fluid 5.

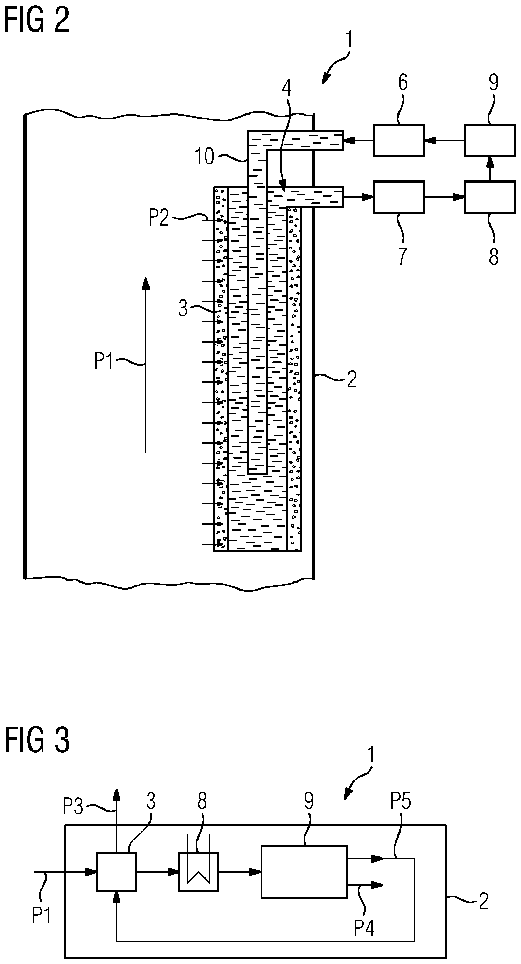

Das Konzentrationsgefälle wird insbesondere dadurch aufrechterhalten, dass das hydrophobe Fluid 5 mit einer bestimmten Strömungsgeschwindigkeit kontinuierlich durch den Membrankörperinnenraum 4 strömt. Hierfür ist der Vorrichtung 1 eine Zuführeinrichtung 6 zur Zuführung des hydrophoben Fluids 5 in den Membrankörperinnenraum 4 und eine Abführeinrichtung 7 zur Abführung des mit Wasserdampf angereicherten hydrophoben Fluids 5 aus dem Membrankörperinnenraum 1 zugehörig (vgl. FIG 2). Die Zuführeinrichtung 6 wie auch die Abführeinrichtung 7 umfassen geeignete Fördereinrichtungen (nicht gezeigt), wie z. B. Pumpen, zur Zu- bzw. Abführung des hydrophoben Fluids 5 in bzw. aus dem Membrankörperinnenraum 4.

Mithin ist sichergestellt, dass mit Wasser beladenes hydrophobes Fluid 5 aus dem Membrankörperinnenraum 4 abgeführt wird und unbeladenes hydrophobes Fluid 5 in den Membrankörperinnenraum 4 zugeführt wird. In einem sich aus dem Verhältnis der Menge an in den Membrankörperinnenraum 4 zugeführten und der Menge an aus dem Membrankörperinnenraum 4 abgeführten hydrophoben Fluid 5 ergebenden Gleichgewichtszustand ist die Konzentration des in dem durch den Membrankörperinnenraum 4 strömenden hydrophoben Fluid 5 enthaltenen Wasserdampfs typischerweise deutlich geringer als die Konzentration des in dem Gasstrom enthaltenen Wasserdampfs.

Für die Ausbildung der Triebkraft, welche die Permeation von Wasserdampf aus dem Wasserdampf enthaltenden Gasstrom durch den Membrankörper 3 in den Membrankörperinnenraum 4 bedingt, ist wesentlich, dass an der dem Wasserdampf enthaltenden Gasstrom zugewandten Oberfläche des Membrankörpers 3 eine sehr geringe Wasserdampfkonzentration gegeben ist.

Gegebenenfalls kann auf die Zuführeinrichtung 6 sowie die Abführeinrichtung 7 und somit ein erzwungenes Strömen des hydrophoben Fluids 5 innerhalb des Membrankörperinnenraums 4 verzichtet werden, da es im Rahmen der Erfindung grundsätzlich auch möglich ist, dass die Abtrennung des in dem hydrophoben Fluid 5 enthaltenen Wassers auch durch natürliche Konvektion bzw. Gravitation und der daraus folgenden Ansammlung von Wasser am Boden des Membrankörpers 3 erfolgen kann.

Um die Triebkraft für die Permeation des in dem Gasstrom enthaltenen Wasserdampfs durch den Membrankörper 3 in den Membrankörperinnenraum 4 und somit in das in dem Membrankörperinnenraum 4 strömende hydrophobe Fluid 5 weiter zu steigern, kann in dem Membrankörperinnenraum 4 ein Unterdruck anliegen. Mithin liegt der Druck innerhalb des Membrankörperinnenraums 4 deutlich unterhalb des Drucks außerhalb des Membrankörpers 3 und sonach innerhalb des von dem Gasstrom durchströmten Kanals 2. Zur Realisierung des Unterdrucks innerhalb des Membrankörpers 3 bzw. innerhalb des Membrankörperinnenraums 4 umfasst die Vorrichtung 1 eine Druckregeleinrichtung (nicht gezeigt), z. B. in Form einer Vakuumpumpe. Mit der gleichen Zielsetzung ist es selbstverständlich alternativ oder ergänzend auch denkbar, den Druck außerhalb des Membrankörpers 3 zu erhöhen.

Der in dem hydrophoben Fluid 5 aufgenommene Wasserdampf liegt dort typischerweise in Form einzelner, verteilter oder zumindest teilweise koagulierter Gas- oder Flüssigkeitsblasen vor. Das Wasserdampf enthaltende hydrophobe Fluid 5 kann sonach als Dispersion erachtet werden.

Die Abtrennung des in dem hydrophoben Fluid 5 enthaltenen Wasserdampfs von dem hydrophoben Fluid 5 erfolgt in einem Kondensationsschritt und einem diesem nachfolgenden Trennschritt.

In dem Kondensationsschritt, welcher über eine der erfindungsgemäßen Vorrichtung 1 zugehörige, dem Membrankörper 3 nachgeschaltete Kondensationseinrichtung 8 (vgl. Fig. 2, 3) durchgeführt wird, wird der in dem hydrophoben Fluid 5 enthaltene Wasserdampf kondensiert, d. h. das in dem hydrophoben Fluid 5 enthaltene Wasser wird von seinem gasförmigen Zustand in seinen flüssigen Zustand überführt. Wie in FIG 1 prinzipiell gezeigt, kann derart ein Phasengemisch mit zwei getrennt voneinander vorliegenden Phasen, d. h. einer im Wesentlichen aus dem hydrophoben Fluid bestehenden ersten Phase und einer im Wesentlichen aus Wasser bestehenden zweiten Phase gebildet werden. In den jeweiligen Phasen können geringfügige Anteile der jeweils anderen Phasen enthalten sein.

Um eine möglichst hohe Kondensationstemperatur respektive einen möglichst hohen Wasserdampfpartialdruck des in dem Kondensationsschritt zu kondensierenden Wasserdampfs zu erhalten und so den für die Kondensation erforderlichen Kühlbedarf bzw. die für die Kondensation erforderliche Kühlleistung, welche über eine der Kondensationseinrichtung 8 zugehörige Kühleinrichtung (nicht gezeigt) bereitgestellt wird, möglichst gering zu halten und auf einem hohen Temperaturniveau abzurufen, kann der Druck innerhalb der Kondensationseinrichtung 8 erhöht werden. Für die Kondensation können somit neue Kühlquellen genutzt werden oder aber bei Verwendung bisheriger Kühlquellen die Temperaturdifferenz für den Wärmeübergang erhöht werden, was den Einsatz von kompakteren Kühleinrichtungen mit geringeren Leistungsaufnahmen ermöglicht. Ebenso ist es derart möglich, die Temperaturspreizung eines zur Kühlung verwendeten Kühlmediums, wie z. B. Luft, zu erhöhen, so dass der für die Kühlung aufzubringende bzw. notwendige Kühlmittelmassenstrom und der damit verbundene Energiebedarf reduziert werden kann.

In dem dem Kondensationsschritt folgenden Trennschritt, welcher über eine der erfindungsgemäßen Vorrichtung 1 zugehörige, der Kondensationseinrichtung 8 nachgeschaltete Trenneinrichtung 9 (vgl. Fig. 2, 3) durchgeführt wird, wird die aus kondensiertem Wasser bestehende zweite Phase von der aus hydrophobem Fluid 5 bestehenden ersten Phase chemisch und/oder physikalisch abgetrennt. Die Abtrennung der aus Wasser bestehenden zweiten Phase von der aus hydrophoben Fluid 5 bestehenden ersten Phasen kann z. B. über Sedimentation erfolgen. Zweckmäßig ist in der Trenneinrichtung 9 eine niedrige Strömungsgeschwindigkeit vorzusehen, um Sedimentationsprozesse zu ermöglichen respektive die Effizienz von Sedimentationsprozessen zu erhöhen.

FIG 2 zeigt eine Prinzipdarstellung einer Vorrichtung 1 zur Abtrennung von Wasser, insbesondere Wasserdampf, aus einem Wasser, insbesondere Wasserdampf, enthaltenden Fluidstrom gemäß einem Ausführungsbeispiel der Erfindung. Anhand von Fig. 2 ist eine denkbare konstruktive Umsetzung der erfindungsgemäßen Vorrichtung 1 ersichtlich. Die Vorrichtung 1 ist wiederum unmittelbar in einen einen Wasserdampf enthaltenden Gasstrom führenden Kanal 2 geschaltet.

In den von dem hohlzylindrischen Membrankörper 3 begrenzten Membrankörperinnenraum 4 ragt ein sich koaxial zu der Längsachse des Membrankörpers 3 durch den Membrankörper 3 erstreckender Zuführkanal 10. Der Zuführkanal 10 ist im Bereich der in Fig. 2 oberen Stirnseite des Membrankörpers 3 mit einer ebenso im Bereich der oberen Stirnseite des Membrankörpers 3 angeordneten Zuführeinrichtung 6 verbunden. Über die Zuführeinrichtung 6 wird in kontinuierlicher Weise zur Aufnahme von Wasserdampf bereites hydrophobes Fluid 5 in den Zuführkanal 10 gefördert, welches hydrophobe Fluid 5 im Bereich des im Bereich der unteren Stirnseite des Membrankörpers 3 gelegenen freien Endes des Zuführkanals 10 aus dem Zuführkanal 10 austritt. Das aus dem Zuführkanal 10 ausgetretene hydrophobe Fluid 5 strömt innerhalb eines den Zuführkanal 10 radial umgebenden Ringraums nach oben, wobei es sich mit durch den Membrankörper 3 in den Membrankörperinnenraum 4 permeiertem Wasserdampf anreichert, und wird über die ebenso im Bereich der oberen Stirnseite des Membrankörpers 3 angeordnete Abführeinrichtung 7 aus dieser abgeführt.

Ersichtlich kommuniziert die Abführeinrichtung 7 unter Zwischenschaltung der Kondensationseinrichtung 8 und der Trenneinrichtung 9 mit der Zuführeinrichtung 6, wodurch der vorstehend beschriebene geschlossene Kreislauf gebildet ist. Der Kreislauf umfasst also insbesondere folgende der erfindungsgemäßen Vorrichtung 1 zugehörige Funktionskomponenten: Zuführeinrichtung 6, Membrankörper 3, Abführeinrichtung 7, Kondensationseinrichtung 8 und Trenneinrichtung 9.

Sofern eine Kondensation von Wasserdampf bereits innerhalb des Membrankörpers 3 stattfindet, ist eine Kondensationseinrichtung 8 nicht unbedingt erforderlich. Dem Membrankörper 3 wäre hier insbesondere eine Kühleinrichtung bzw. Wärmeabführungseinrichtung nachgeschaltet, über welche eine Kühlung des hydrophoben Fluids erfolgt.

FIG 3 zeigt eine Prinzipdarstellung einer Vorrichtung 1 zur Abtrennung von Wasser, insbesondere Wasserdampf, aus einem Wasser, insbesondere Wasserdampf, enthaltenden Fluidstrom gemäß einem Ausführungsbeispiel der Erfindung. Bei dem in FIG 3 gezeigten Ausführungsbeispiel handelt es sich im Wesentlichen um eine Darstellung des in FIG 2 gezeigten Ausführungsbeispiels als Prozessfließbild.

Anhand von FIG 3 lässt sich nochmals der Ablauf eines Ausführungsbeispiels des erfindungsgemäßen Verfahrens zur Abtrennung von Wasserdampf aus einem Wasserdampf enthaltenden Gasstrom erläutern. Der in dem Gasstrom enthaltene Wasserdampf permeiert insbesondere aufgrund eines Gefälles zwischen der außerhalb des Membrankörpers 3 gegebenen Wasserdampfkonzentration und der innerhalb des Membrankörpers 3, d. h. innerhalb des Membrankörperinnenraums 4, gegebenen Wasserdampfkonzentration in das durch den Membrankörperinnenraum 4 strömende hydrophobe Fluid 5. Der übrige Gasstrom strömt zumindest teilweise befreit von in diesem ursprünglich enthaltenen Wasserdampf aus der Vorrichtung 1 (vgl. Pfeil P3). Selbstverständlich kann der Gasstrom rückgeführt werden, so dass dieser die Vorrichtung 1 mehrmals durchströmt.

Das mit Wasserdampf beladene hydrophobe Fluid 5 wird einer Kondensationseinrichtung 8 zugeführt, welche in FIG 3 lediglich als Kühleinrichtung bzw. Wärmetauscher dargestellt ist. In einem in der Kondensationseinrichtung 8 durchgeführten Kondensationsschritt wird der in dem hydrophoben Fluid enthaltene Wasserdampf kondensiert. Dabei bildet sich ein eine im Wesentlichen aus dem hydrophoben Fluid bestehende erste Phase und eine im Wesentlichen aus Wasser bestehende zweite Phase enthaltendes Phasengemisch, aus welchem Phasengemisch die den kondensierten Wasserdampf enthaltende zweite Phase in einem in einer der Kondensationseinrichtung 8 nachgeschalteten Trenneinrichtung 9 durchgeführten Trennschritt wie durch den Pfeil P4 angedeutet abgetrennt wird.

Die allein das hydrophobe Fluid 5 enthaltende erste Phase wird, wie durch den Pfeil P5 angedeutet, zurück in den Membrankörperinnenraum 4 geführt. Hierfür können zwischen die Trenneinrichtung 9 und den Membrankörper 3 geschaltete Fördereinrichtungen (nicht gezeigt), z. B. in Form von Pumpen, vorgesehen sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (1) zur Abtrennung von Wasser, insbesondere Wasserdampf, aus einem Wasser, insbesondere Wasserdampf, enthaltenden Fluidstrom, umfassend wenigstens einen für Wasser durchlässigen Membrankörper (3), welcher wenigstens einen Membrankörperinnenraum (4) begrenzt, wobei der Membrankörperinnenraum (4) zur Durchströmung mit wenigstens einer hydrophoben Flüssigkeit (5) zur Aufnahme von aus dem Fluidstrom durch den Membrankörper (3) in den Membrankörperinnenraum (3) tretendem Wasser, insbesondere Wasserdampf, geeignet ist, wobei der Membrankörper (3) hohlzylindrisch ausgeführt ist, **dadurch gekennzeichnet, dass** eine Zuführeinrichtung (6) mit wenigstens einem in dem Membrankörperinnenraum (4) koaxial zu der Längsachse des Membrankörpers (3) angeordneten Zuführkanal (10) angeordnet ist, wobei der Zuführkanal (10) den Membrankörperinnenraum (4) zumindest über einen Teil der Länge des Membrankörperinnenraums (4) durchsetzt, wobei eine Abführeinrichtung (7) im Bereich eines den wenigstens einen Zuführkanal (10) radial umschließenden Ringraums angeordnet ist.

2. Vorrichtung nach Anspruch 1, **dadurch gekennzeichnet, dass** an oder im Bereich einer ersten Stirnseite des Membrankörpers (3) eine Zuführeinrichtung (6) zur Zuführung der hydrophoben Flüssigkeit (5) in den Membrankörperinnenraum (4) angeordnet ist, und an oder im Bereich einer zweiten Stirnseite des Membrankörpers (3) eine Abführeinrichtung (7) zur Abführung der hydrophoben Flüssigkeit (5) aus dem Membrankörperinnenraum (4) anordenbar oder angeordnet ist.

3. Vorrichtung nach einem der vorangehenden Ansprüche, **gekennzeichnet durch** wenigstens eine dem Membrankörper (3) zugeordnete, insbesondere nachgeschaltete, Kondensationseinrichtung (8) zur Kondensation von in der hydrophoben Flüssigkeit (5) enthaltenen gasförmigen Wassers und/oder wenigstens eine dem Membrankörper (3) zugeordnete, insbesondere nachgeschaltete, Kühleinrichtung zur Kühlung von der durch Kondensation von Wasserdampf erwärmten hydrophoben Flüssigkeit (5).

4. Vorrichtung nach einem der vorangehenden Ansprüche, **gekennzeichnet durch** eine dem Membrankörper (3), gegebenenfalls der dem Membrankörper (3) zugeordneten Kondensationseinrichtung (8), zugeordneten, insbesondere nachgeschalteten, Trenneinrichtung (9) zur chemischen und/oder physikalischen, insbesondere mechanischen, Abtrennung des in der hydrophoben Flüssigkeit (5) aufgenommenen Wassers von der hydrophoben Flüssigkeit (5).

5. Verfahren zur Abtrennung von Wasser, insbesondere Wasserdampf, aus einem Wasser, insbesondere Wasserdampf, enthaltenden Fluidstrom, wobei das abzutrennende Wasser, insbesondere Wasserdampf, durch wenigstens einen für Wasser durchlässigen Membrankörper (3) in wenigstens eine innerhalb eines von dem Membrankörper (3) begrenzten Membrankörperinnenraum (4) befindliche, den Membrankörperinnenraum (4) durchströmende, hydrophobe Flüssigkeit (5) überführt wird, **dadurch gekennzeichnet, dass** die hydrophobe Flüssigkeit (5) durch eine Zuführeinrichtung (6) geführt wird, die mit wenigstens einem Zuführkanal (10) in den Membrankörperinnenraum (4) koaxial zu der Längsachse des Membrankörpers (3) angeordnet ist, wobei der Zuführkanal (10) den Membrankörperinnenraum (4) zumindest über einen Teil der Länge des Membrankörperinnenraums (4) durchsetzt, wobei eine Abführeinrichtung (7) im Bereich eines den wenigstens einen Zuführkanal (10) radial umschließenden Ringraums angeordnet ist.

6. Verfahren nach Anspruch 5, **dadurch gekennzeichnet, dass** die hydrophobe Flüssigkeit (5) in einem Kreislauf, in welchen der Membrankörper (3) geschaltet ist, zirkuliert.

7. Verfahren nach einem der Ansprüche 5 oder 6, **dadurch gekennzeichnet, dass** innerhalb des Membrankörperinnenraums (4) ein Unterdruck anliegt.

8. Verfahren nach Anspruch 5 bis 7, **dadurch gekennzeichnet, dass** in der hydrophoben Flüssigkeit (5) enthaltenes gasförmiges Wasser kondensiert wird.

9. Verfahren nach Anspruch 8, **dadurch gekennzeichnet, dass** der Druck des in der hydrophoben Flüssigkeit (5) enthaltenen gasförmigen Wassers vor der Kondensation erhöht wird.

10. Verfahren nach einem der Ansprüche 5 bis 9, **dadurch gekennzeichnet, dass** das in der hydrophoben Flüssigkeit (5) enthaltene Wasser chemisch und/oder physikalisch, insbesondere mechanisch, aus der hydrophoben Flüssigkeit (5) abgetrennt wird.

11. Verfahren nach einem der Ansprüche 5 bis 10, **dadurch gekennzeichnet, dass** als hydrophobe Flüssigkeit (5) eine natürliche oder synthetische organische Flüssigkeit, insbesondere ein natürliches oder mineralisches oder synthetisches Öl, verwendet wird.

## Claims

1. Device (1) for the separation of water, in particular water vapor, from a fluid flow containing water, in particular water vapor, including at least one water-permeable membrane body (3) that delimits at least one membrane body interior space (4), wherein the membrane body interior space (4) is suitable for being flowed through by at least one hydrophobic liquid (5) for taking up water, in particular water vapor, that passes out of the fluid flow, through the membrane body (3) and into the membrane body interior space (3), wherein the membrane body (3) is of hollow cylindrical construction, **characterized in that** a supply facility (6) having at least one supply channel (10) that is arranged in the membrane body interior space (4), coaxially with respect to the longitudinal axis of the membrane body (3), is arranged, wherein the supply channel (10) passes through the membrane body interior space (4) at least over a part of the length of the membrane body interior space (4), wherein a removal facility (7) is arranged in the region of an annular space that radially surrounds the at least one supply channel (10).

2. Device according to Claim 1, **characterized in that** a supply facility (6) for supplying the hydrophobic liquid (5) into the membrane body interior space (4) is arranged on or in the region of a first end face of the membrane body (3), and a removal facility (7) for removing the hydrophobic liquid (5) from the membrane body interior space (4) is or may be arranged on or in the region of a second end face of the membrane body (3).

3. Device according to one of the preceding claims, **characterized by** at least one condensation facility (8) that is associated with the membrane body (3), in particular being downstream thereof, for condensing gaseous water that is contained in the hydrophobic liquid (5) and/or at least one cooling facility that is associated with the membrane body (3), in particular being downstream thereof, for cooling hydrophobic liquid (5) that has been heated by condensation of water vapor.

4. Device according to one of the preceding claims, **characterized by** at least one separating facility (9), which is associated with the membrane body (3), where appropriate associated with the condensation facility (8) that is associated with the membrane body (3), and is in particular downstream thereof, for the chemical and/or physical, in particular mechanical, separation of the water that is taken up in the hydrophobic liquid (5) from the hydrophobic liquid (5) .

5. Method for the separation of water, in particular water vapor, from a fluid flow containing water, in particular water vapor, wherein the water, in particular water vapor, to be separated is transferred through at least one water-permeable membrane body (3) into at least one hydrophobic liquid (5) that is within a membrane body interior space (4) delimited by the membrane body (3) and flows through the membrane body interior space (4), **characterized in that** the hydrophobic liquid (5) is conducted through a supply facility (6) that is arranged with at least one supply channel (10) into the membrane body interior space (4) coaxial with respect to the longitudinal axis of the membrane body (3), wherein the supply channel (10) passes through the membrane body interior space (4) at least over a part of the length of the membrane body interior space (4), wherein a removal facility (7) is arranged in the region of an annular space that radially surrounds the at least one supply channel (10).

6. Method according to Claim 5, **characterized in that** the hydrophobic liquid (5) circulates in a circuit in which the membrane body (3) is connected.

7. Method according to one of Claims 5 or 6, **characterized in that** a negative pressure is applied within the membrane body interior space (4).

8. Method according to Claim 5 to 7, **characterized in that** gaseous water contained in the hydrophobic liquid (5) is condensed.

9. Method according to Claim 8, **characterized in that** the pressure of the gaseous water that is contained in the hydrophobic liquid (5) is elevated before the condensation.

10. Method according to one of Claims 5 to 9, **characterized in that** the water contained in the hydrophobic liquid (5) is separated from the hydrophobic liquid (5) chemically and/or physically, in particular mechanically.

11. Method according to one of Claims 5 to 10, **characterized in that** as the hydrophobic liquid (5) there is used a natural or synthetic organic liquid, in particular a natural or mineral or synthetic oil.

## Revendications

1. Système (1) de séparation d'eau, notamment de vapeur d'eau, d'un courant de fluide contenant de l'eau, notamment de la vapeur d'eau, comprenant au moins un corps (3) formant membrane, qui est perméable à l'eau et qui délimite au moins un espace (4) intérieur du corps formant membrane, dans lequel l'espace (4) intérieur du corps formant membrane est, pour l'absorption d'eau, notamment de vapeur d'eau, sortant du courant de fluide dans l'espace (3) intérieur du corps formant membrane à travers le corps (3) formant membrane, propre au passage d'au moins un liquide (5) hydrophobe, dans lequel le corps (3) formant membrane est réalisé en cylindre creux, **caractérisé en ce qu'**un dispositif (6) d'apport est disposé en ayant au moins un conduit (10) d'apport, disposé à l'intérieur (4) du corps formant membrane coaxialement à l'axe longitudinal du corps (3) formant membrane, le conduit (10) d'apport passant dans l'espace (4) intérieur du corps formant membrane au moins sur une partie de la longueur de l'espace (4) intérieur du corps formant membrane, un dispositif (7) d'évacuation étant disposé dans une région d'un espace annulaire entourant radialement le au moins un conduit (10) d'apport.

2. Système suivant la revendication 1, **caractérisé en ce que** sur ou dans la région d'un premier côté frontal du corps (3) formant membrane est disposé un dispositif (6) d'apport pour apporter le liquide (5) hydrophobe à l'espace (4) intérieur du corps formant membrane et sur/ou dans la région d'un deuxième côté frontal du corps (3) formant membrane est disposé, ou peut l'être, un dispositif (7) d'évacuation pour évacuer le liquide (5) hydrophobe de l'espace (4) intérieur du corps formant membrane.

3. Système suivant l'une des revendications précédentes, **caractérisé par** au moins un dispositif (8) de condensation, associé au corps (3) formant membrane, en étant monté notamment en aval, pour la condensation d'eau sous forme gazeuse contenue dans le liquide (5) hydrophobe et/ou par au moins un dispositif de refroidissement associé au corps (3) formant membrane, en étant notamment monté en aval, pour le refroidissement du liquide (5) hydrophobe chauffé par condensation de vapeur d'eau.

4. Système suivant l'une des revendications précédentes, **caractérisé par** un dispositif (9) de séparation associé, en étant notamment monté en aval? au corps (3) formant membrane, le cas échéant au dispositif (8) de condensation associé au corps (3) formant membrane, pour séparer du liquide (5) hydrophobe l'eau absorbée dans le liquide (5) hydrophobe.

5. Procédé de séparation d'eau, notamment de vapeur d'eau, d'un courant de fluide contenant de l'eau, notamment de la vapeur d'eau, l'eau à séparer, notamment la vapeur d'eau, étant transférée, en passant à travers au moins un corps (3) formant membrane perméable à l'eau, dans au moins un liquide (5) hydrophobe se trouvant à l'intérieur d'un espace (4) intérieur du corps formant membrane délimité par le corps (3) formant membrane et passant dans l'espace (4) intérieur du corps formant membrane, **caractérisé en ce que** l'on apporte le liquide (5) hydrophobe par un dispositif (6) d'apport, qui est disposé par au moins un conduit (10) d'apport dans l'espace (4) intérieur du corps de la membrane, coaxialement à l'axe longitudinal du corps (3) de la membrane, le conduit (10) d'apport passant dans l'espace (4) intérieur du corps formant membrane, au moins sur une partie de la longueur de l'espace (4) intérieur du corps formant membrane, un dispositif (7) d'évacuation étant disposé dans la région d'un espace annulaire entourant radialement le au moins un conduit (10) d'apport.

6. Procédé suivant la revendication 5, **caractérisé en ce que** le liquide (5) hydrophobe circule dans un circuit dans lequel est monté le corps (3) formant membrane.

7. Procédé suivant l'une des revendication 5 ou 6, **caractérisé en ce qu'**une dépression est appliquée à l'intérieur de l'espace (4) intérieur du corps formant membrane.

8. Procédé suivant la revendication 5 à 7, **caractérisé en ce que** l'on condense de l'eau sous forme gazeuse contenue dans le liquide (5) hydrophobe.

9. Procédé suivant la revendication 8, **caractérisé en ce que** l'on élève la pression de l'eau sous forme gazeuse contenue dans le liquide (5) hydrophobe avant le condensation.

10. Procédé suivant l'une des revendications 5 à 9, **caractérisé en ce que** l'on sépare du liquide (5) hydrophobe l'eau contenu dans le liquide (5) hydrophobe chimiquement et/ou physiquement, notamment mécaniquement.

11. Procédé suivant l'une des revendications 5 à 10, **caractérisé en ce que** l'on utilise, comme liquide (5) hydrophobe, un liquide organique naturel ou synthétique, notamment une huile naturelle ou minérale ou synthétique.
